# EUROPÄISCHE PATENTSCHRIFT

(11) **EP 4 089 335 B1**
(45) Veröffentlichungstag und Bekanntmachung des Hinweises auf die Patenterteilung: **29.11.2023**
(21) Anmeldenummer: 21173863.8
(22) Anmeldetag: 14.05.2021
(51) Int. Cl.: F28F 1/14, F24D 3/16, F28F 1/22, F24F 5/00, F28D 21/00, F28D 1/053, F28F 1/16

(54) **DECKENRADIATOR MIT EINER STERNFÖRMIGEN QUERSCHNITTSFORM**
CEILING RADIATOR HAVING A STAR-SHAPED CROSS-SECTION
RADIATEUR DE PLAFOND DOTÉ D'UNE FORME DE SECTION TRANSVERSALE EN ÉTOILE

(43) Veröffentlichungstag der Anmeldung: 16.11.2022
(73) Patentinhaber: Allfest GmbH, 78554 Aldingen (DE)
(72) Erfinder: FLAIG, Hartmut, 78554 Aldingen (DE)
(74) Vertreter: Patent- und Rechtsanwälte Behrmann Wagner PartG mbB

(56) Entgegenhaltungen:
- DE-A1- 19 617 718
- DE-A1-102014 226 713
- DE-C1- 19 615 419
- KR-U- 20110 009 431

## Beschreibung

Die vorliegende Erfindung betrifft einen Deckenradiator nach dem Oberbegriff des Anspruchs 1.

Gattungsgemäße Deckenradiatoren werden für das Beheizen oder Kühlen von Räumen verwendet. Dabei werden mehrere stangenförmige Deckenradiatoren vorzugsweise an der Decke aufgehängt, um den Raum mittels emittierter Wärmestrahlung zu beheizen oder mittels absorbierter Wärmestrahlung zu kühlen.

Aus der DE 298 04 240 U1 ist ein Deckenradiator bekannt, wobei Strahlplatten mittels Verbindungselementen so miteinander verbunden sind, dass eine regelmäßige mehreckige/polygonale Querschnittsform ausgebildet ist. Dabei sind alle Ecken der Querschnittsform bevorzugt gleichmäßig auf einem Kreis angeordnet.. Durchflussrohre sind in den Verbindungselementen an den Ecken der Querschnittsform oder im Hohlraum in der Mitte der Querschnittsform angeordnet, um ein Heiz- oder Kühlfluid zu leiten. Die einzelnen Deckenradiatoren sind drehbar mittels eines Trägers an der Decke gelagert, wobei keine bevorzugte Orientierung hinsichtlich der Wärmestrahlung genannt wird.

In der DE 10 2011 053 206 A1 ist ein Deckenradiator offenbart, der ebenfalls für das Heizen oder Kühlen von Räumen geeignet ist, wobei der Deckenradiator ein Auffangsystem für ein Kondensat ausbildet. Ein kreuzförmiges Querschnittsprofil ist offenbart, dass vier Kreuzspitzen mit zueinander laufenden Strahlplatten aufweist, so dass ein Kondensat zu den Kreuzspitzen fließt und in einer Auffangrinne aufgefangen werden kann. Dabei ist die Aufhängung so ausgeführt, dass eine Kreuzspitze in Richtung des Bodens zeigt, um Flüssigkeit mittels einer Auffangrinne an dieser Kreuzspitze abzuführen.

Weitere gattungsgemäße Deckenradiatoren sind aus den Dokumenten DE19615419C1, DE19617718A1, DE102014226713 und KR20110009431U bekannt. Ausgehend vom vorangehend genannten Stand der Technik liegt der vorliegenden Erfindung die Aufgabe zugrunde, einen Deckenradiator vorzuschlagen, der im Vergleich zu einem Deckenradiator mit gleichen Außendimensionen einen größeren Betrag an Wärmestrahlungsenergie in Bodenrichtung emittieren oder absorbieren kann.

Diese Aufgabe wird mit einem Deckenradiator mit den Merkmalen des unabhängigen Anspruchs 1 gelöst. Vorteilhafte Ausführungsformen sind Gegenstand der Unteransprüche.

Der Grundgedanke der Erfindung in ihrer allgemeinsten Form sieht vor, dass der Deckenradiator eine sternförmige Querschnittsform mit fünf oder mehr Sternspitzen aufweist, wobei zumindest zwei zueinander laufende Strahlplatten eine Sternspitze ausbilden, und dass eine Aufhängung so angeordnet ist und/oder die Querschnittsform, insbesondere die Anzahl der Sternspitzen so gewählt ist, dass im montierten Zustand an einer Decke die Strahlplatten eine größere Abstrahlfläche in eine Bodenrichtung ausbilden als zu der Decke.

Dabei hat die Erfindung erkannt, dass durch die erfindungsgemäße Ausführung der Querschnittsform und/oder Ausrichtung des Deckenradiators, insbesondere ein Arbeits- oder Wohnbereich, am Boden des Raumes effektiver beheizt oder gekühlt werden kann. Zum Beispiel weist ein Deckenradiator mit fünf Sternspitzen und einer Aufhängung an einer der Sternspitzen eine größere Strahlungsoberfläche in Bodenrichtung auf als ein kreuzförmiger Deckenradiator. Im Betrieb kann insbesondere der Bodenbereich des Raumes schneller gekühlt oder beheizt werden.

Des Weiteren verbessert sich die Biegesteifigkeit mit zusätzlichen Spitzen oder Sternspitzen, so dass das Eigengewicht oder das Gewicht pro Längeneinheit der zusätzlichen Sternspitze, beispielsweise gegenüber einem kreuzförmigen Deckenradiator, durch reduzierten Materialeinsatz ausgeglichen werden kann. Durch die verbesserte Wärmeübertragung bei gleichbleibendem Eigengewicht können weniger Deckenradiatoren verwendet werden, um zum Beispiel Energie einzusparen oder um den Einsatz von Deckenradiatoren bei lastbeschränkten Decken zu ermöglichen.

Vorteilhafterweise ist das zumindest eine Durchflussrohr in der Mitte der sternförmigen Querschnittsform angeordnet und verbindet die Sternspitzen am Außendurchmesser miteinander.

Das zumindest eine Durchflussrohr in der Mitte des Sterns ist bevorzugt ein kreisrundes Durchflussrohr. Im Vergleich zu einem rechteckigen Durchflussrohr können kreisrunde Fluidanschlüsse einfacher angebracht werden.

Weiterhin kann es vorgesehen sein, dass zusätzlich zu dem Durchflussrohr in der Mitte des Sterns, ein Durchflussrohr innerhalb wenigstens einer Sternspitze angeordnet ist. Dadurch kann sich die Durchflussmenge an Kühl- oder Heizfluid bei gleichbleibender Durchflussgeschwindigkeit erhöhen oder es kann sich die emittierte oder absorbierte Strahlungsleistung vergrößern.

Die Sternspitzen sind vorzugsweise so ausgebildet, dass äußere Ecken der mehreren Sternspitzen auf einem ersten Kreis und innere Ecken an einer Verbindungsstelle der mehreren Sternspitzen mit dem zumindest einen Durchflussrohr in der Mitte des Sterns auf einem zweiten Kreis um den Mittelpunkt der Querschnittsform verteilt sind, und dass die mehreren Sternspitzen gleichschenklige Dreiecke ausbilden.

In einer Weiterbildung, beträgt der Winkel der Sternspitzen an den äußeren Ecken 16°-38°, bevorzugt 24°, und der Außendurchmesser des Durchflussrohres beträgt 25%-42%, bevorzugt 38%, des Kreisdurchmessers um die äußeren Ecken.

Des Weiteren können die Sternspitzen mit den Strahlplatten so angeordnet sein, dass eine Flüssigkeit in Bodenrichtung ableitbar ist. So kann zum Beispiel verhindert werden, dass sich ein Kondensat an den inneren Ecken der Sternspitzen ansammelt.

Bevorzugt sind die mehreren Sternspitzen und/oder das zumindest eine Durchflussrohr als Strangpressprofil, vorzugsweise aus Aluminium, herstellbar. So ergibt sich eine in Querschnittsrichtung nahtlose Fläche und der Deckenradiator ist, zumindest in Querschnittsrichtung, in einem Stück hergestellt. Vorteilhafterweise weist der Deckenradiator deshalb in Querschnittsrichtung keine Schweißnähte auf. Bei einer Verbindung von mehreren Profilen oder Bauteilen in Längsrichtung und/oder bei der Anbringung von Abschlussteilen kann es selbstredend zu Nähten, beispielsweise Schweißnähten, kommen. Durch eine einteilige Ausbildung in Querschnittsrichtung kann eine effektive Herstellung erreicht werden, die zudem die Wärmeübertragung von dem Durchflussrohr zu den Sternspitzen verbessern kann.

Nachfolgend werden Details und Ausführungsformen der Erfindung anhand von lediglich schematischen Zeichnungen erläutert.

Es zeigen:
Fig. 1a: eine Seitenansicht des sternförmigen Querschnitts des Deckenradiators in einem Raum;
Fig. 1b: eine Detailansicht des Deckenradiators gemäß der Fig. 1a;
Fig. 2a: eine Seitenansicht gemäß der Fig. 1a, wobei die Querschnittsform aus einem Stück besteht;
Fig. 2b: eine perspektivische Ansicht des Deckenradiators gemäß der Fig. 2a;

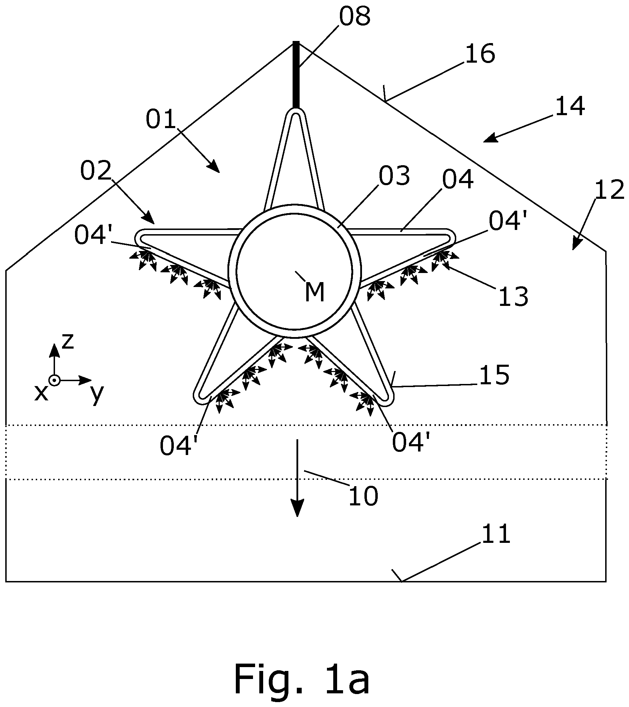

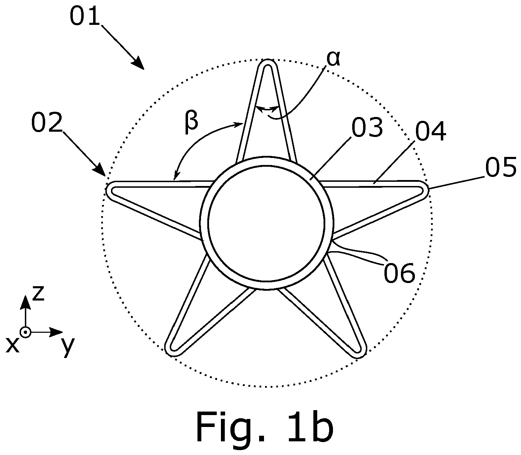

In der Fig. 1 ist ein Deckenradiator 01 dargestellt, der in einem Raum 14 in einem Deckenbereich 12 angeordnet ist. Der Deckenradiator 01 weist eine sternförmige Querschnittsform mit fünf Sternspitzen 02 auf, wobei jeweils zwei zueinander laufende Strahlplatten 04 eine Sternspitze 02 ausbilden. Die Sternspitzen 02 sind mit einem Durchflussrohr 03 in der Mitte M der sternförmigen Querschnittsform verbunden.

Im Betrieb des Deckenradiators 01, kann eine Kühl- oder Heizflüssigkeit das Durchflussrohr 03 entlang der x-Achse durchfließen, sodass der Deckenradiator 01 an Sternoberflächen 15 Wärmestrahlung emittiert oder absorbiert.

Eine Aufhängung 08 an der Decke 16 ist an einer Sternspitze 02 angeordnet, so dass die fünf Sternspitzen 02 eine größere Abstrahlfläche 15 in Bodenrichtung 10 ausbilden als zu der Decke 16. Dabei wirken besonders die Strahlplatten 04' mit der dargestellten Wärmestrahlung 13 in die Bodenrichtung 10, um zum Beispiel einen Arbeits- oder Wohnbereich auf dem Boden 11 zu heizen oder zu kühlen. Die restlichen Strahlplatten 04 in Richtung der Decke 16 wirken über Reflexionen mit einer geringeren Intensität als die Strahlplatten 04' auf den Boden 11 ein.

Alternativ könnte die Aufhängung 08 an dem Durchflussrohr 03 angeordnet sein. Dann würde sich jedoch die Abstrahlfläche 15 in Bodenrichtung 10 im Vergleich zu einer Aufhängung 08 an einer der Sternspitzen 02 verringern.

Das Durchflussrohr 03 ist bevorzugt kreisförmig ausgeführt, so dass es im Vergleich zu eckigen Durchflussrohren einfach mit Fluidanschlüssen verbindbar ist. In einer alternativen Ausführung kann das Durchflussrohr 03 auch eine rechteckige Form aufweisen, zum Beispiel mit Seitenflächen entsprechend der Anzahl Sternspitzen 02. Auch wäre es möglich, dass die Strahlplatten 04 selbst ein sternförmiges Durchflussrohr ausbilden.

Weiterhin kann es vorgesehen sein, dass zusätzlich zu dem Durchflussrohr 03 in der Mitte M des Sterns 01 ein Durchflussrohr innerhalb einer der Sternspitzen 02 angeordnet ist. Dadurch kann die Durchflussmenge bei gleichbleibender Durchflussgeschwindigkeit erhöht werden oder die emittierte oder absorbierte Strahlungsleistung vergrößert werden.

Die Sternspitzen 02 in der Fig. 1b sind bevorzugt so angeordnet, dass äußere Ecken 05 der fünf Sternspitzen 02 auf einem ersten Kreis 17 und innere Ecken 06 an der Verbindungsstelle der fünf Sternspitzen 02 mit dem Durchflussrohr 03 in der Mitte M des Sterns 01 auf einem zweiten Kreis 18 gleichmäßig um den Mittelpunkt M der Querschnittsform verteilt sind, und dass die fünf Sternspitzen 02 gleichschenklige Dreiecke ausbilden.

Die Dreiecke weisen einen bevorzugt gleichen inneren Winkel α zwischen den Strahlplatten 04 auf. Bevorzugt beträgt der Winkel α der Sternspitzen 02 an den äußeren Ecken 05 16°-38°, hier 24°. Des Weiteren beträgt der Außendurchmesser des Durchflussrohres 25%-42%, hier 38%, des Kreisdurchmessers um die äußeren Ecken 05.

Ein Winkel β ist ebenfalls bevorzugt gleichmäßig entlang des Umfangs ausgeführt, wobei die Kombination der Winkel α und β die Wärmestrahlung 13 in die Bodenrichtung 10 vergrößern.

Des Weiteren sind die Winkel α und β bevorzugt so ausgeführt ist, dass Flüssigkeit, zum Beispiel ein Kondensat, sich nicht an den inneren Ecken 06 ansammelt, sondern in Bodenrichtung 10 ableitbar ist.

Bei einer gewünschten unregelmäßigen Ausführung des Winkels α oder des Winkels β, ist bevorzugt, dass eine möglichst große Oberfläche 15 der Strahlplatten 02 in einem möglichst stumpfen Winkel zu der Bodenrichtung 10 geneigt ist, wobei die Oberflächen sich möglichst nicht nicht überdecken. Zum Beispiel können einzelne Sternspitzen 02 vergrößert werden, um ein Überdecken zu vermeiden.

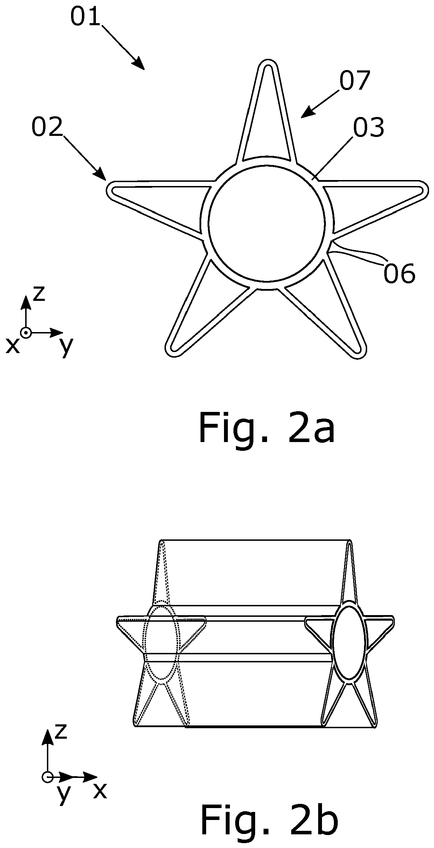

Bevorzugt sind die mehreren Sternspitzen 02 und/oder das zumindest eine Durchflussrohr 03 als Strangpressprofil, vorzugsweise aus Aluminium oder Kunststoff, herstellbar. So ergibt sich die in der Fig. 2a dargestellte nahtlose Querschnittsfläche. Der Deckenradiator 01 ist dann wie in der Fig. 2b dargestellt in Querschnittsrichtung einem Stück 07 hergestellt. In der Schnittdarstellung nicht gezeigte Abschluss- oder Anschlussteile können selbstredend durch separate Bauteile bereitgestellt und mit dem einteiligen Profilbauteil verbunden werden. Vorteilhafterweise weist der Deckenradiator 01 deshalb in Querschnittsrichtung keine Schweißnähte an den inneren Ecken 06 auf und die Wärmeübertragung von dem Durchflussrohr 03 in der Mitte M zu den Sternspitzen 02 kann verbessert werden. Das Strangpressprofil kann in der x-Richtung eine Länge von 1m bis 2m und bis zu 5m aufweisen.

Der soweit beschriebene Deckenradiator 01 kann in vielfältiger Art und Weise abgewandelt oder modifiziert werden, ohne vom Erfindungsgedanken abzuweichen. So ist es zum Beispiel denkbar, eine größere Anzahl von Sternspitzen 02 zu verwenden oder es können mehrere Deckenradiatoren 01 mit unterschiedlich angeordneten Sternspitzen 02 verwendet werden, um die Wärmestrahlung auf einen bestimmten Bereich am Boden 11 des Raumes 14 zu fokussieren.

### Bezugszeichenliste:

- 01: Deckenradiator
- 02: Sternspitzen
- 03: Durchflussrohr
- 04: Strahlplatten
- 04': Strahlplatten in Bodenrichtung
- 05: äußere Ecken
- 06: innere Ecken
- 07: einstückiger Querschnitt
- 08: Aufhängung
- 10: Bodenrichtung
- 11: Boden
- 12: Deckenbereich
- 13: Wärmestrahlung
- 14: Raum
- 15: Abstrahlfläche
- 16: Decke
- 17: erster Kreis
- 18: zweiter Kreis

## Patentansprüche

1. Deckenradiator (01) für das Beheizen oder Kühlen von Räumen (14) mit zumindest einem Durchflussrohr (03) für den Transport eines Heiz- oder Kühlmittels und mit mehreren Strahlplatten (04), die mit dem zumindest einen Durchflussrohr (03) wärmeleitend verbunden sind,
wobei der Deckenradiator (01) eine sternförmige Querschnittsform aufweist,
wobei zumindest zwei zueinander laufende Strahlplatten (04) eine Sternspitze (02) ausbilden, und dass eine Aufhängung (08) so angeordnet ist und/oder die Querschnittsform, insbesondere die Anzahl der Sternspitzen (02) so gewählt ist, dass im montierten Zustand an einer Decke (16) die Strahlplatten (04) eine größere Abstrahlfläche (15) in einer Bodenrichtung (10) ausbilden als zu der Decke (16), **dadurch gekennzeichnet, dass** die sternförmige Querschnittsform fünf oder mehr Sternspitzen aufweist.

2. Deckenradiator nach dem Anspruch 1,
**dadurch gekennzeichnet,**
**dass** das zumindest eine Durchflussrohr (03) in der Mitte M der sternförmigen Querschnittsform angeordnet ist.

3. Deckenradiator nach einem der Ansprüche 2,
**dadurch gekennzeichnet,**
**dass** das zumindest eine Durchflussrohr (03) in der Mitte M des Sterns (01) ein kreisrundes Durchflussrohr (03) ist.

4. Deckenradiator nach einem der Ansprüche 2 bis 3,
**dadurch gekennzeichnet,**
**dass** zusätzlich zu dem Durchflussrohr (03) in der Mitte M des Sterns (01), ein Durchflussrohr (03) innerhalb wenigstens einer Sternspitze (02) angeordnet ist.

5. Deckenradiator nach einem der Ansprüche 2 bis 4,
**dadurch gekennzeichnet,**
**dass** äußere Ecken (05) der mehreren Sternspitzen (02) auf einem ersten Kreis (17) und innere Ecken (06) an der Verbindungsstelle der mehreren Sternspitzen (02) mit dem zumindest einen Durchflussrohr (03) in der Mitte M des Sterns (01) auf einem zweiten Kreis (18) gleichmäßig um den Mittelpunkt M der Querschnittsform verteilt sind und die mehreren Sternspitzen (02) gleichschenklige Dreiecke ausbilden.

6. Deckenradiator nach Anspruch 4,
**dadurch gekennzeichnet,**
**dass** der Winkel α der Sternspitzen (02) an den äußeren Ecken (05) 34°-38°, bevorzugt 36°, beträgt und der Außendurchmesser des Durchflussrohres 25%-42%, bevorzugt 38%, des Kreisdurchmessers um die äußeren Ecken beträgt.

7. Deckenradiator nach Anspruch 6,
**dadurch gekennzeichnet,**
**dass** die Sternspitzen (02) mit den Strahlplatten (04) so angeordnet sind, dass eine Flüssigkeit auf den Abstrahlflächen (15) in Bodenrichtung (10) ableitbar ist.

8. Deckenradiator nach einem der Ansprüche 1-7,
**dadurch gekennzeichnet,**
**dass** die mehreren Sternspitzen (02) und/oder das zumindest eine Durchflussrohr (03) als Strangpressprofil, vorzugsweise aus Aluminium, herstellbar ist.

## Claims

1. A ceiling radiator (01) for heating or cooling rooms (14), said ceiling radiator (01) having at least one flow tube (03) for the transport of a heating or cooling medium and having several radiant panels (04) connected in a heat-conducting manner to the at least one flow tube (03),
wherein the ceiling radiator (01) has a star-shaped cross-sectional shape, wherein at least two converging radiant panels (04) form a star tip (02), and wherein a suspension (08) is disposed in such a manner and/or the cross-sectional shape, in particular the number of the star tips (02), is selected in such manner that, in the mounted state on a ceiling (16), the radiant panels (04) realize a larger radiating surface (15) in a floor direction (10) than toward the ceiling (16),
**characterized in that** the star-shaped cross-sectional shape has five or more star tips.

2. The ceiling radiator according to claim 1,
**characterized in that**
the at least one flow tube (03) is disposed in the center M of the star-shaped cross-sectional shape.

3. The ceiling radiator according to claim 2,
**characterized in that**
the at least one flow tube (03) in the center M of the star (01) is a circular flow tube (03).

4. The ceiling radiator according to any one of claims 2 to 3,
**characterized in that**
in addition to the flow tube (03) in the center M of the star (01), a flow tube (03) is disposed within at least one star tip (02).

5. The ceiling radiator according to any one of claims 2 to 4,
**characterized in that**
outer corners (05) of several star tips (02) are uniformly distributed on a first circle (17) and inner corners (06) at the joint of the several star tips (02) with the at least one flow tube (03) in the center M of the star (01) are uniformly distributed around the central point M of the cross-sectional shape on a second circle (18) and **in that** the several star tips (02) form isosceles triangles.

6. The ceiling radiator according to claim 4,
**characterized in that**
the angle α of the star tips (02) at the outer corners (05) is 34° to 38°, preferably 36°, and the outer diameter of the flow tube is 25 % to 42 %, preferably 38 %, of the circle diameter around the outer corners.

7. The ceiling radiator according to claim 6,
**characterized in that**
the star tips (02) are disposed with the radiant panels (04) in such a manner that a liquid on the radiating surfaces (15) is dischargeable in the floor direction (10).

8. The ceiling radiator according to any one of claims 1 to 7,
**characterized in that**
the several star tips (02) and/or the at least one flow tube (03) is/are producible as an extruded profile, preferably made of aluminum.

## Revendications

1. Radiateur au plafond (01) pour le chauffage ou refroidissement de salles (14), ledit radiateur au plafond (01) ayant au moins un tube d'écoulement (03) pour le transport d'un agent de chauffage ou de refroidissement et ayant plusieurs panneaux radiants (04) reliés de manière thermoconductrice à l'au moins un tube d'écoulement (03), dans lequel le radiateur au plafond (01) a une forme de section transversale en forme d'étoile, dans lequel au moins deux panneaux radiants (04) convergents forment une pointe d'étoile (02), et dans lequel une suspension (08) est disposée de manière que et/ou la forme de section transversale, notamment le nombre de pointes d'étoile (02), est sélectionnée de manière qu'à l'état monté à un plafond (16), les panneaux radiants (04) réalisent une surface radiante (15) plus grande dans la direction du sol (10) que vers le plafond (16),
**caractérisé en ce que** la forme de section transversale en forme d'étoile a cinq pointes d'étoile (02) ou plus.

2. Radiateur au plafond selon la revendication 1,
**caractérisé en ce que**
l'au moins un tube d'écoulement (03) est disposé au centre M de la forme de section transversale en forme d'étoile.

3. Radiateur au plafond selon la revendication 2,
**caractérisé en ce que**
l'au moins un tube d'écoulement (03) au centre M de l'étoile (01) est un tube d'écoulement (03) circulaire.

4. Radiateur au plafond selon l'une quelconque des revendications 2 à 3,
**caractérisé en ce**
**qu'**en plus du tube d'écoulement (03) au centre M de l'étoile (01), un tube d'écoulement (03) est disposé à l'Intérieur d'au moins une pointe d'étoile (02).

5. Radiateur au plafond selon l'une quelconque des revendications 2 à 4,
**caractérisé en ce que**
des coins extérieurs (05) des plusieurs pointes d'étoile (02) sont répartis uniformément sur un premier cercle (17) et des coins intérieurs (06) sur des points de jonctions des plusieurs pointes d'étoile (02) avec l'au moins un tube d'écoulement (03) au centre M de l'étoile (01) sont répartis uniformément autour du point central M de la forme de section transversale sur un deuxième cercle (18) et **en ce que** le plusieurs pointes d'étoile (02) forment des triangles isocèles.

6. Radiateur au plafond selon la revendication 4,
**caractérisé en ce que**
l'angle α des pointes d'étoile (02) aux coins extérieurs (05) est de 34° à 38°, de préférence 36°, et le diamètre extérieur du tube d'écoulement est de 25 % à 42 %, de préférence 38 %, du diamètre du cercle autour des coins extérieurs.

7. Radiateur au plafond selon la revendication 6,
**caractérisé en ce que**
les pointes d'étoile (02) sont disposées avec les panneaux radiants (04) de manière qu'un liquide sur les surfaces radiantes (15) est capable d'être dérivé dans la direction du sol (10).

8. Radiateur au plafond selon l'une quelconque des revendications 1 à 7,
**caractérisé en ce que**
les plusieurs pointes d'étoile (02) et/ou l'au moins un tube d'écoulement (03) sont capables d'être produits comme profilé extrudé, de préférence en aluminium.
